Europäisches Patentamt

(19) European Patent Office

Office européen des brevets

(11) Publication number: **0 112 471**
**B1**

(12) **EUROPEAN PATENT SPECIFICATION**

(45) Date of publication of patent specification: **11.03.87**

(51) Int. Cl.⁴: **B 65 G 17/20**

(21) Application number: **83111031.7**

(22) Date of filing: **04.11.83**

(54) Device for moving conveyor containers.

(30) Priority: **17.12.82 US 450630**

(43) Date of publication of application:
**04.07.84 Bulletin 84/27**

(45) Publication of the grant of the patent:
**11.03.87 Bulletin 87/11**

(84) Designated Contracting States:
**CH DE GB LI SE**

(56) References cited:
**AT-B- 363 123**
**AT-B- 363 515**
**DD-A- 132 582**
**FR-A-2 507 165**
**US-A-3 122 362**
**US-A-4 116 427**

(73) Proprietor: **Rockwell International Corporation**
**600 Grant Street**
**Pittsburgh Pennsylvania 15219 (US)**

(72) Inventor: **Statkus, George Mathew**
**3829 West 78th Street**
**Chicago Illinois 60652 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

The present invention pertains to an apparatus for moving a multiplicity of container pockets along an endless pathway in a conveyor having an endless drive chain operatively connected to a pair of sprocket members and a conveyor track member for guiding the container pockets during their travel.

A number of United States patents show and describe conveyors for effecting travel of a multiplicity of container pockets in an endless pathway and, for reference to the teachings of such disclosures, attention is hereby directed to US—A—3,122,362 and US—A—4,116,427 the former of which shows an apparatus of the above mentioned type.

The present invention aims at providing an improved apparatus for effecting travel of a multiplicity of container pockets along an endless pathway in a conveyor with independent control of each of the container pockets whereby they are caused to travel about the curved portions of the conveyor with a smoother motion of travel than has been heretofore possible with known conveyor devices of the prior art.

In accordance with the invention, the apparatus of the above mentioned type is characterized by comprising a box type support housing having a container pocket fixed on one side thereof; a pair of spaced and laterally extending rib members operatively associated with said conveyor track and provided on the opposite side of said support housing; bearing members mounted in said rib members for engaging said conveyor track; and a link member interconnecting said support housing with the endless drive chain for moving the container pockets about said conveyor track by means of said bearing members.

Preferred embodiments of the invention are defined in the dependent claims.

In a particularly preferred embodiment, the support housing has a V-shaped container fixedly attached to one of its side surfaces. The opposite side of this support housing is provided with a pair of horizontal and laterally extending spaced apart rib members. These rib members are adapted to rotatably support rollers or wheel elements in opposed relation that are adapted to operatively engage the upper and lower surfaces of the conveyor's endless track member. The support housing is connected to the endless drive chain by means of a link element having one end pivotally connected to the latter and the opposite end to the support housing. This link element is effective in pulling its respective container pocket along the endless track member and, being pivotally connected at each end as described, it is caused to assume an angular position as its container pocket travels around the curved portion of the endless track member. This angular position assumed by the link element locates the fulcrum point of the latter's connection to the support housing inwardly of its fulcrum point on the chain thus causing the container pockets to travel at a different or smaller radius whereat the spacing between adjacent container pockets is decreased by comparison with their spacing during their travel along non-curved sections of the track member. By causing the container pockets to move along a smaller radius on the curved sections of a conveyor and at reduced spacing between adjacent pockets, a means is provided whereby the container pockets move with a substantially smoother motion of travel through the curved sections than has been heretofore possible with known conveyors of the prior art.

Further details of the invention will become more fully apparent by reference to the appended claims and as the following detailed description proceeds in reference to the figures of drawing wherein:

Fig. 1 is a perspective view of a newspaper assembler showing the endless conveyor and its pockets with which the device according to the invention is operatively associated;

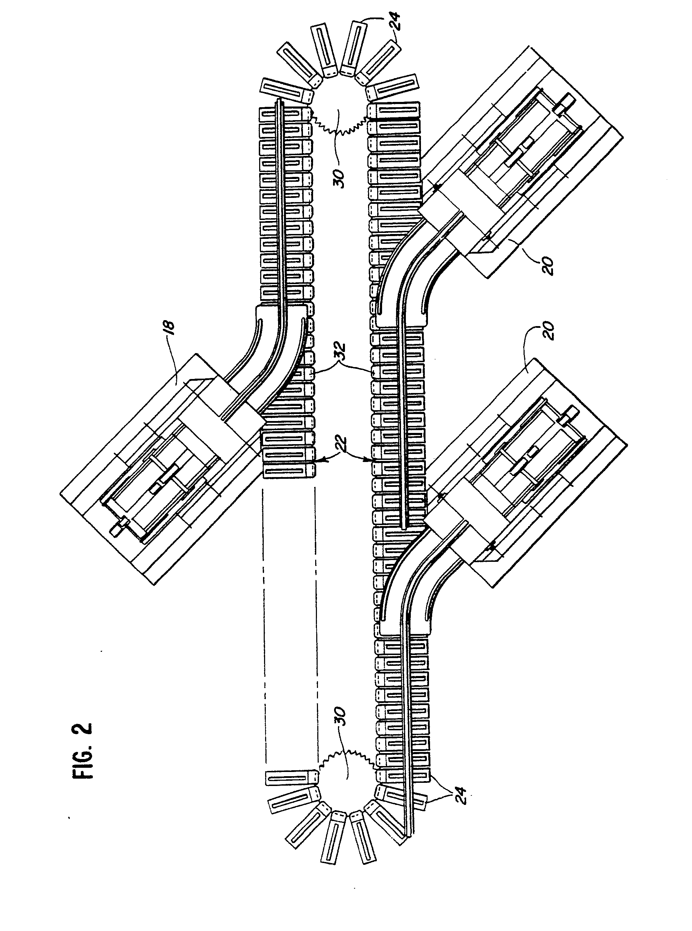

Fig. 2 is a top view of an endless conveyor showing gripper type feeders operatively associated therewith;

Fig. 3 is a view in side elevation of a portion of a conveyor showing the support housing and the elements which are operatively connected to the driving chain and track member;

Fig. 4 is a perspective view of a portion of one end of the conveyor;

Fig. 5 is a perspective view showing further detail of the elements of the preferred embodiment which operatively connect the support housing with the track member.

Fig. 6 is a sectional view of a modification of the elements for operatively connecting the support housing with the track member; and

Fig. 7 is a view similar to Fig. 6 but showing a second modification of the elements for operatively connecting the support housing with the track member.

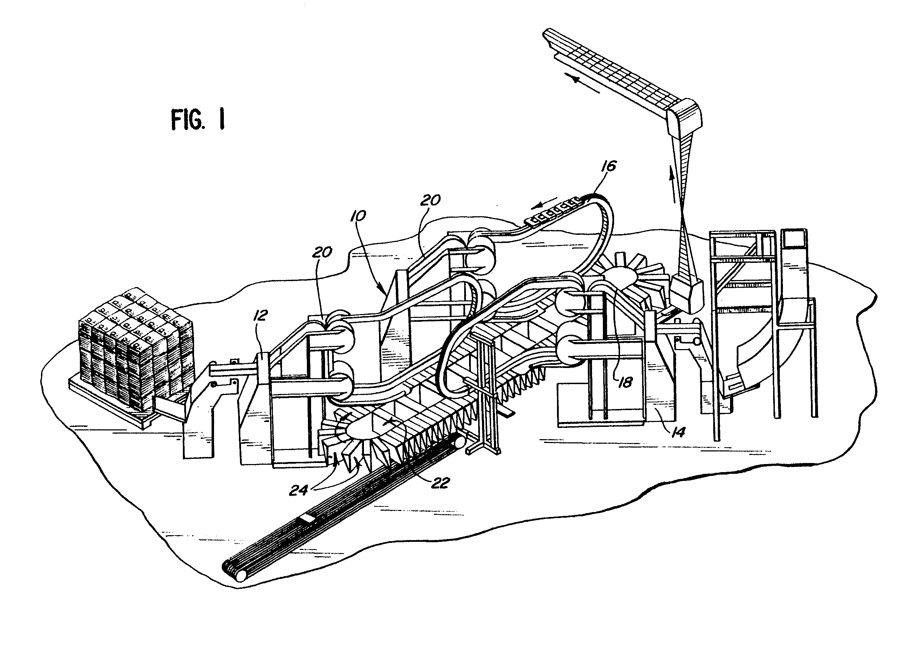

Referring now to Fig. 1, the various mechanisms are shown that form a newspaper assembler that is identified generally by numeral 10. This assembler includes among its several mechanisms a pair of spaced stream makers 12 and 14, a gripper conveyor 16 and gripper type feeders 18 and 20.

A pocket carousel or endless conveyor with which the present invention is operatively associated is identified generally by numeral 22 and is provided with a multiplicity of pockets of V-shaped configuration that are depicted generally by numeral 24.

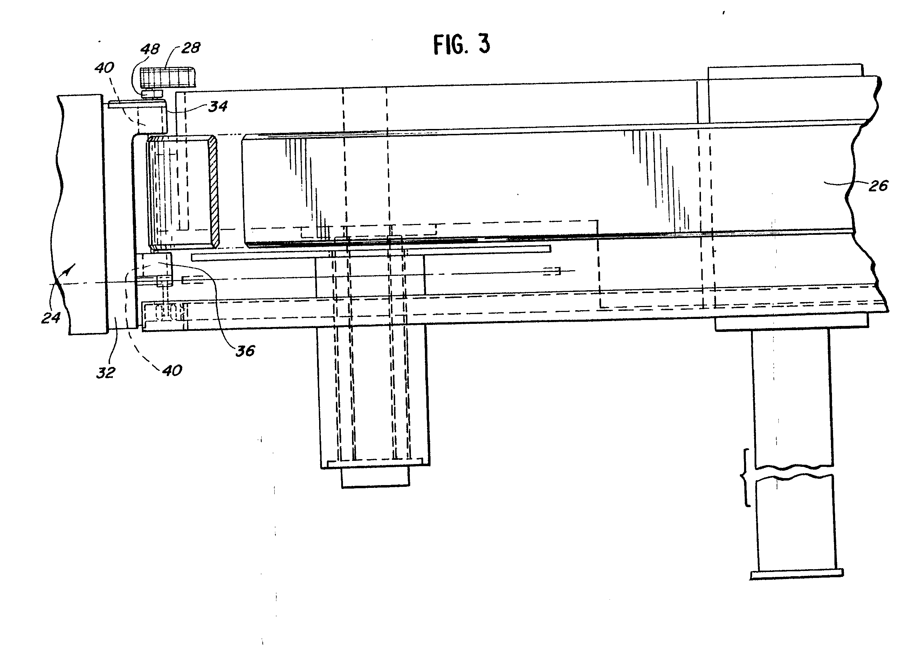

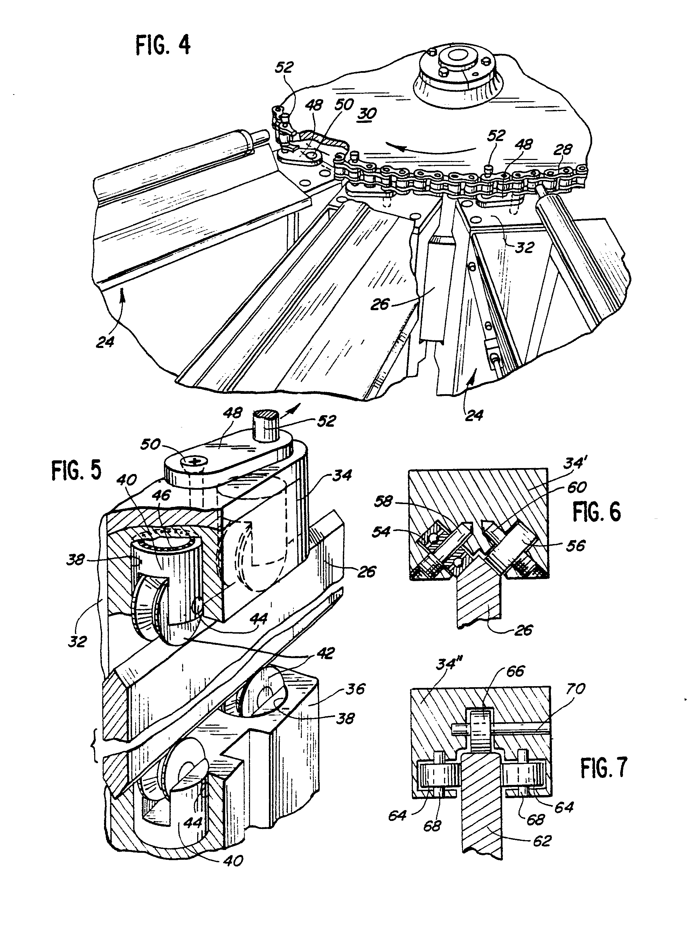

As shown in Figs. 3 and 5, a portion of the conveyor's endless track member is shown at 26 and the pockets 24 are caused to travel in their intended pathway by being operatively connected, in a manner yet to be described, to an endless drive chain 28 that is disposed in operative engagement with a pair of spaced sprocket members 30.

As shown in Figs. 3 and 4, the pockets 24 are each provided with a support housing 32 which serves to operatively connect them to the conveyor's track member 26. In Fig. 3 a container or pocket 34 is shown fixed to the outer vertical surface of the support housing 32 and the opposite side being disposed in operative association with the track member 26 is provided with a pair of spaced, horizontally located and laterally extending rib members 34 and 36.

According to the preferred embodiment shown in Fig. 5, the rib members 34 and 36 are provided with circular pockets 38 disposed in aligned and opposed relation and have bifurated support plugs 40 rotatably assembled therein. These support plugs 40 are adapted to rotatably support wheel members 42 within their bifurcations by means of a pin 44 and the wheels have a configuration conforming to the upper and lower surfaces of the track member 26 with which they are in engagement. Additionally, the plug members assembled in the circular pockets 38 formed in the upper rib member 34 (Fig. 5) are each provided with a thrust bearing 46 which serves to facilitate rotative movement of the plugs as they are caused to travel about the curved portions of the endless track member 26.

The means for effecting travel of the individual support housings 32 and their respective pockets 24 about the endless track member 26 defines a link member 48 (Figs. 4 and 5) having one end pivotably connected to the upper surface of the rib member 34 by means of a screw 50. The opposite end of this link member 48 is pivotally connected to the endless drive chain 28 by means of a pin 52 which also serves to interconnect adjacent links of the chain.

Figs. 6 and 7 show modifications of the means for effecting movement of the support housing 32 and their respective pockets 24 about the endless track member 26. In Fig. 6 the upper portion of the support housing is depicted by numeral 34' and houses a pair of roller bearings 54 and 56 mounted on pins 58 and 60 respectively which are adapted to engage the cuneiformed surfaces of the endless track member 26. Although not shown, it should be understood that the lower portion of the support housing houses another pair of roller bearings for engaging the lower cuneiformed surfaces of the endless track member 26.

In Fig. 7 the endless track member is identified by numeral 62 and has a rectangular cross sectional configuration. The upper portion of the support housing is depicted by numeral 34'' in Fig. 7 and houses a pair of rollers 64 for engaging the sides of the endless track member 62 and a third roller member 66 for engaging the upper surfaces thereof. Roller members 64 are rotatably supported on pins 68 and roller member 66 on pin 70. As with the modification in Fig. 6, it should be understood that the lower portion of the support housing not shown in Fig. 7 is provided with the same roller members for engaging the lower portion of the endless track member 62.

Although the present invention has been described in connection with a preferred embodiment and two modifications thereof, it should be understood that other modifications and variations may be resorted to without departing from the spirit and scope of the invention as claimed.

## Claims

1. An apparatus for moving a multiplicity of container pockets (24) along an endless pathway in a conveyor (22) having an endless drive chain (28) operatively connected to a pair of spaced sprocket members (30) and a rail type conveyor track member (26, 62) for guiding the container pockets (24) during their travel; characterized by further comprising:
   (a) a box type support housing (32) having a container pocket (24) fixed on one side thereof;
   (b) a pair of spaced and laterally extending rib members (34, 36) operatively associated with said conveyor track (26, 62) and provided on the opposite side of said support housing (32);
   (c) bearing members (42, 54, 56, 64, 66) mounted in said rib members (34, 36) for engaging said conveyor track (26, 62); and
   (d) a link member (48) interconnecting said support housing (32) with the endless drive chain (28) for moving the container pockets (24) about said conveyor track (26, 62) by means of said bearing members (42, 54, 56, 64, 66).

2. The apparatus according to claim 1, wherein said track member (62) is of the endless type having a rectangular cross sectional configuration with horizontal upper and lower surfaces.

3. The apparatus according to claim 2, wherein said pair of spaced and laterally extending rib members (34, 36) are disposed in close proximity with the horizontal upper and lower surfaces and said bearing members (64, 66) are roller members mounted therein for engaging said surfaces and the opposed sides thereof.

4. The apparatus according to claim 1, wherein said track member (26) is of the endless type having an elongated cross sectional configuration with cuneifromed upper and lower surfaces.

5. The apparatus according to claim 4, wherein said pair of spaced and laterally extending rib members (34, 36) are disposed in close proximity with said cuneiformed upper and lower surfaces and said bearing members (54, 56) are anti-friction bearings mounted therein for engaging said surfaces.

6. The apparatus according to claim 4, wherein said pair of spaced and laterally extending rib members (34, 36) are disposed adjacent said cuneiformed upper and lower surfaces and said bearing members (54, 56) are a plurality of wheel members (42) of conforming configuration rotatably supported therein for operatively engaging said surfaces.

7. The apparatus according to claim 6, wherein said spaced and laterally extending rib members (34, 36) include:
   (a) a plurality of opposed circular pockets (38) formed therein;
   (b) a bifurcated cylindrical plug element (40) rotatably supported in each of said circular pockets (38); and

(c) a pin member (44) for rotatably supporting one of said wheel members (42) in the bifurcation of each said cylindrical plug elements (40).

8. The apparatus according to claim 1, wherein said link member has one end pivotably connected to said support housing (32) and the opposite end to the endless drive chain (28).

**Patentansprüche**

1. Gerät zur Bewegung einer Vielzahl von Behältertaschen (24) entlang einer endlosen Wegstrecke in einem Förderer (22), der eine endlose, wirkungsmäßig an zwei beabstandete Kettenräder (30) angeschlossene Antriebskette (28) und ein schienenartiges Förderer-Bahnelement (26, 62) zur Führung der Behältertaschen (24) während ihrer Bahnbewegung umfaßt; dadurch gekennzeichnet, daß es ferner enthält:

(a) ein kastenartiges Trägergehäuse (32), das eine auf seiner einen Seite befestigte Behältertasche (24) aufweist;

(b) zwei voneinander beabstandete und sich seitlich erstreckende Rippenelemente (34, 36), die wirkungsmäßig der Förderebahn (26, 62) zugeordnet und auf der gegenüberliegenden Seite des genannten Trägergehäuses (32) vorgesehen sind;

(c) Lagerelemente (42, 54, 56, 64, 66), die in den Rippenelementen (34, 36) montiert sind, um mit der genannten Fördererbahn (26, 62) in Eingriff zu gelangen; und

(d) eine Verbindungsstrebe (48), welche das genannte Trägergehäuse (32) und die endlose Antriebskette (28) miteinander verbindet, um die Behältertaschen (24) mittels der Lagerelemente (42, 54, 56, 64, 66) über die genannte Fördererbahn (26, 62) zu bewegen.

2. Gerät nach Anspruch 1, bei welchem das Bahnelement (62) vom Endlostyp ist und eine rechtwinklige Querschnittsgestalt mit einer waagerechten Oberrseite und waagerechten Unterseite aufweist.

3. Gerät nach Anspruch 2, bei welchem die zwei voneinander beabstandeten und sich seitlich erstreckenden Rippenelemente (34, 36) in enger Nähe zur waagerechten Oberseite und Unterseite angeordnet sind un die genannten Lagerelemente (64, 66) Rollenelemente sind, die darin gelagert sind, um mit den genannten Seiten und ihren gegenüberliegenden Seiten in Eingriff zu gelangen.

4. Gerät nach Anspruch 1, bei welchem das genannte Bahnelement (26) vom Endlostyp ist und eine gestreckte Querschnittsgestalt mit keilförmiger Oberseite und Unterseite aufweist.

5. Gerät nach Anspruch 4, bei welchem die zwei voneinander beabstandeten und sich seitlich erstreckenden Rippenelemente (34, 36) in enger Nähe zu der keilförmigen Oberseite und Unterseite angeordnet sind und die genannten Lagerelemente (54, 56) reibungsarme Lager sind, welche darin zum Eingriff mit den genannten Seiten angebracht sind.

6. Gerät nach Anspruch 4, bei welchem die zwei voneinander beabstandeten und sich seitlich erstreckenden Rippenelemente (34, 36) angrenzend an die genannte keilförmige Oberseite und Unterseite angeordnet sind und die genannten Lagerelemente (54, 56) mehrere Radelemente (42) sind, die entsprechend geformt und drehbar darin gelagert sind, um mit den genannten Seiten wirkungsmäßig in Eingriff zu kommen.

7. Gerät nach Anspruch 1, bei welchem die voneinander beabstandeten und sich seitlich erstreckenden Rippenelemente (34, 36) umfassen:

(a) mehrere einander gegenüberliegende kreisrunde Taschen (38), die darin gebildet sind;

(b) ein gegabeltes zylindrisches, stopfenförmiges Element (40), welches drehbar jeweils in einer der kreisrunden Taschen (38) gelagert ist; und

(c) ein Stiftelement (44) zur drehbaren Lagerung eines der Radelemente (42) in der Gabelung des jeweiligen zylindrischen, stopfenartigen Elementes (40).

8. Gerät nach Anspruch 1, bei welchem die genannte Verbindungsstrebe an einem Ende schwenkbar an das Lagergehäuse (32) und am gegenüberliegenden Ende an der endlosen Antriebskette (28) angeschlossen ist.

**Revendications**

1. Appareil pour mouvoir une multitude d'alvéoles conteneurs (24), le long d'un parcours sans fin, dans un convoyeur (22) comportant une chaîne d'entraînement sans fin (28) reliée fonctionnellement à une paire d'organes du type pignon pour chaîne (30) espacés l'un de l'autre, et un organe formant piste de convoyage du type rail (26, 62) destiné à guider les alvéoles-conteneurs (24) durant leur déplacement, caractérisé en ce qu'il comprend en outre:

(a) un bâti support du type caisson (32), sur un côté duquel est fixé un alvéole conteneur (24);

(b) une paire d'organes formant ailettes (34, 36) s'étendant latéralement à distance l'un de l'autre, associés fontionnellement à piste de convoyage (26, 62) et disposés sur le côté opposé du bâti support (32);

(c) des organes porteurs (42, 54, 56, 64, 66) montés dans les organes formant ailettes (34, 36) pour être en prise avec la piste de convoyage (26, 62); et

(d) un organe de liaison (48) reliant le bâti support (32) à la chaîne d'entraînement sans fin (28), afin de déplacer les alvéoles conteneurs (24) le long de la piste de convoyage (26, 62) au moyen des organes porteurs (42, 54, 56, 64, 66).

2. Appareil conforme à la revendication 1, dans lequel l'organe formant piste (62) est du type sans fin à section transversale de configuration rectangulaire à surfaces supérieure et inférieure horizontales.

3. Appareil conforme à la revendication 1, dans lequel la paire d'organes formant ailettes, s'étendant latéralement à distance l'un de l'autre (34, 36), est disposée à proximité immédiate des surfaces horizontales supérieure et inférieure, et dans lequel les organes porteurs (64, 66) sont des organes à galets qui y sonte montés pour être en prise avec ces surfaces et avec leurs côtés opposés.

4. Appareil conforme à la revendication 1, dans lequel l'organe formant piste (26) est du type sans fin à section transversale de configuration allongée dont les surfaces supérieure et inférieure sont en forme de coin.

5. Appareil conforme à la revendication 4, dans lequel la paire d'organes formant ailettes, s'étendant latéralement à distance l'un de l'autre (34, 36), et disposée à proximité immédiate des surfaces supérieure et inférieure en forme de coin, et dans lequel les organes porteurs (54, 56) sont des supports anti-friction qui y sont montés pour être en prise avec ces surfaces.

6. Appareil conforme à la revendication 4, dans lequel la paire d'organes formant ailettes, s'étendant latéralement à distance l'un de l'autre (34, 36) est adjacente aux surfaces supérieure et inférieure en forme de coin, et dans lequel les organes porteurs (54, 56) sont constitués de plusieurs organes formant roulettes (42) de configuration correspondante, qui y sont supportés rotativement pour être en prise fonctionnelle avec ces surfaces.

7. Appareil conforme à la revendication 6, dans lequel la paire d'organes formant ailettes, s'étendant latéralement à distance l'un l'autre (34, 36), comprend:

(a) plusieurs alvéoles circulaires opposés (38) façonnés dans ces organes;

(b) un élément (40) en forme de bouchon cylindrique formant chape supporté rotativement dans chacun des alvéoles circulaires (38); et

(c) un organe formant broche (44) destiné à supporter rotativement l'un des organes formant roulettes (42) dans la chape de chacun des éléments en forme de bouchon cylindrique (40).

8. Appareil conforme à la revendication 1, dans lequel l'organe de liaison a une extrémité reliée de façon pivotante au bâti support (32) et l'extrémité opposée reliée à la chaîne d'entraînement sans fin (28).

FIG. I

FIG. 2

# FIG. 3

FIG. 4

FIG. 5

FIG. 6

FIG. 7